(19) Europäisches Patentamt / European Patent Office / Office européen des brevets

(11) **EP 2 541 280 B1**

(12) **FASCICULE DE BREVET EUROPEEN**

(45) Date de publication et mention
de la délivrance du brevet:
**16.01.2019 Bulletin 2019/03**

(51) Int Cl.:
**G01T 1/29** (2006.01)   **G01T 1/24** (2006.01)

(21) Numéro de dépôt: **12173742.3**

(22) Date de dépôt: **27.06.2012**

(54) **Dispositif de détection de rayonnement ionisant à détecteur semi-conducteur à réponse spectrométrique améliorée**

Vorrichtung zur Erfassung von ionisierender Strahlung mit einem Halbleiterdetektor mit verbesserter spektrometrischer Ansprache

Device for detecting ionising radiation with semiconductor detector with improved spectrometric response

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2011 FR 1155953**

(43) Date de publication de la demande:
**02.01.2013 Bulletin 2013/01**

(73) Titulaire: **Commissariat à l'Énergie Atomique et aux Énergies Alternatives 75015 Paris (FR)**

(72) Inventeurs:
• **Brambilla, Andréa**
  **38113 Veurey-Voroize (FR)**
• **OUVRIER-BUFFET, Patrice**
  **74410 SAINT-JORIOZ (FR)**

(74) Mandataire: **Ilgart, Jean-Christophe et al BREVALEX 95, rue d'Amsterdam 75378 Paris Cedex 8 (FR)**

(56) Documents cités:
**EP-A1- 1 739 456**

• **STEPHEN E ANDERSON ET AL: "Digital waveform analysis techniques for pixelated semiconductor detectors", NUCLEAR SCIENCE SYMPOSIUM CONFERENCE RECORD, 2007. NSS '07. IEEE, IEEE, PI, 1 octobre 2007 (2007-10-01), pages 1581-1586, XP031206765, ISBN: 978-1-4244-0922-8**
• **HAYWARD ET AL: "Observation of charge-sharing in an HPGe double-sided strip detector", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NETHERLANDS, vol. 579, no. 1, 8 août 2007 (2007-08-08), pages 99-103, XP022190091, ISSN: 0168-9002, DOI: 10.1016/J.NIMA.2007.04.130**

**Description**

**DOMAINE TECHNIQUE**

La présente invention est relative à un dispositif de détection de rayonnement ionisant à détecteur semi-conducteur à réponse spectrométrique améliorée. Ces dispositifs de détection de rayonnement ionisant ont notamment pour application le contrôle non destructif de matériaux, la recherche de substances dangereuses ou illicites par exemple dans des bagages. Les matériaux ou bagages à contrôler sont alors placés entre le dispositif de détection et une source de rayonnement ionisant. Une autre application peut être la médecine et l'observation d'êtres vivants. Ces dispositifs de détection de rayonnement ionisant permettent de faire de l'imagerie des objets ou êtres vivants à contrôler.

**ÉTAT DE LA TECHNIQUE ANTÉRIEURE**

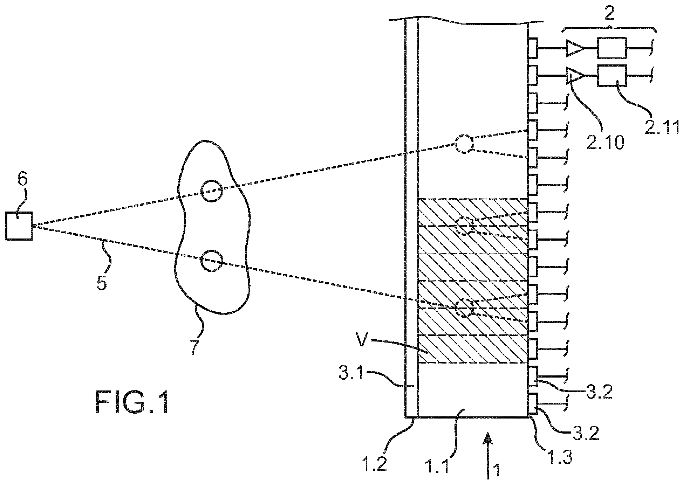

Un dispositif de détection de rayonnement ionisant à détecteur semi-conducteur comporte un détecteur 1 de rayonnement ionisant 5 en matériau semi-conducteur qui coopère avec un circuit électronique de lecture 2 de signaux fournis par le détecteur à semi-conducteur 1. On peut se référer à la figure 1.

Le détecteur 1 de rayonnement ionisant comporte un cristal 1.1 en matériau semi-conducteur de forme généralement parallélipipédique dont deux faces principales 1.2, 1.3, généralement opposées, portent chacune une ou plusieurs électrodes.

Dans les applications d'imagerie, le cristal en matériau semi-conducteur a généralement une épaisseur comprise entre quelques centaines de micromètres et quelques millimètres, voire quelques centimètres et une surface de quelques centimètres au carré voire quelques dizaines de centimètres au carré.

Le matériau semi-conducteur peut être par exemple du CdZnTe, CdTe, $HgI_2$, GaAs, Si et les rayonnements ionisants 5 peuvent être des rayons alpha, bêta, X, gamma ou même des neutrons. Les neutrons ne sont pas directement des rayonnements ionisants mais ils induisent des rayonnements ionisants par les particules créées lors de leur interaction avec la matière.

Parmi les faces principales 1.2, 1.3, du cristal 1.1 semi-conducteur équipées d'électrodes, une première face 1.2 comporte une ou plusieurs électrodes dénommées cathodes 3.1 à porter à un premier potentiel et l'autre face 1.3 comporte une ou plusieurs électrodes dénommées anode 3.2 à porter à un second potentiel supérieur au premier potentiel. En général, le second potentiel est sensiblement la masse et le premier potentiel est négatif. On peut ainsi brancher le circuit de lecture 2 aux anodes 3.2 en évitant tout problème de haute tension. Par la suite, on désignera par électrodes de lecture, celles qui sont raccordées au circuit de lecture.

Les électrodes 3.1, 3.2 servent également à polariser le détecteur 1 de manière à permettre la migration de porteurs de charge (c'est-à-dire d'électrons ou de trous) dans le matériau semi-conducteur, les porteurs de charge étant créés dans le matériau semi-conducteur sous l'effet d'une interaction entre le matériau semi-conducteur et le rayonnement ionisant 5 incident. En effet, un rayonnement ionisant incident d'énergie suffisante va arracher des électrons aux atomes du matériau semi-conducteur qu'il percute.

Dans la plupart des matériaux semiconducteurs usuels cités plus haut, le potentiel appliqué à l'anode est inférieur à celui appliqué à la cathode. Les électrons sont collectés par les anodes 3.2, c'est pourquoi ce sont elles qui sont connectées au circuit de lecture 2.

Les cathodes 3.1 ont généralement un rôle limité à la polarisation du détecteur 1 et il est fréquent d'utiliser une unique cathode.

On utilise généralement plusieurs anodes 3.2 arrangées en matrice ou en barrette, arrangées en plots et isolées les unes des autres.

Lorsque l'on applique une tension de polarisation entre la cathode et les anodes, un champ électrique apparaît dans le matériau semi-conducteur et il va entraîner les trous vers la cathode et les électrons vers les anodes. Chaque anode 3.2 coopère avec un volume V de matériau semi-conducteur qui est face à elle. Ce volume est représenté par la zone hachurée sur la figure 1. Il constitue proprement dit un pixel. L'anode 3.2 est par la suite considérée comme associée au pixel.

Lors d'une interaction du matériau semi-conducteur avec un rayonnement ionisant incident 5 produit par une source de rayonnement ionisant 6, les charges de type électrons générées dans le volume V de matériau semi-conducteur en regard d'une anode 3.2 sont collectées par cette anode. Ces charges collectées par une anode induisent une impulsion de courant électrique dont l'intégrale est proportionnelle à l'énergie déposée par le rayonnement ionisant 5. On utilise une partie du circuit de lecture 2 pour mesurer cette intégrale ; en général, il s'agit d'un préamplificateur de charges 2.10. Ce préamplificateur de charges 2.10 est généralement relié en sortie à un circuit de mise en forme 2.11 des signaux. En sortie du circuit de mise en forme 2.11, on dispose donc de signaux en impulsion dont l'amplitude devrait être proportionnelle à la charge créée par l'interaction du rayonnement ionisant 5 dans le volume V de matériau semi-conducteur en regard de l'anode 3.2.

Il est bien sûr possible de se servir du signal apparaissant sur la cathode pour mesurer la charge totale transitant sans être gêné par un effet pixel côté des anodes. Il peut être aussi utile d'effectuer des mesures bi-paramétriques anode-cathode pour rechercher la profondeur d'interaction du rayonnement ionisant 5 incident.

Lors de l'utilisation d'un tel dispositif de détection de rayonnement ionisant pour faire de l'imagerie, on cherche à obtenir une image de l'objet 7 ou de l'être vivant que l'on place entre la source de rayonnement ionisant 6 et le dispositif de détection. Par la suite on ne parlera plus que de l'objet mais ce n'est pas limitatif. Le rayonnement ionisant 5 qui traverse l'objet 7 est atténué au moment où il atteint le détecteur 1. L'intensité du rayonnement ionisant 5 qui atteint le détecteur 1 dépend de la composition chimique et de la densité de l'objet 7 traversé. Les électrodes de lecture 3.2 reliées au circuit de lecture 2 fournissent des signaux dont l'intensité dépend de l'atténuation apportée par l'objet 7. En traitant ces signaux dans le circuit de lecture 2, on peut obtenir une image du contraste en transmission de l'objet 7, ce qui permet d'acquérir des informations sur la structure interne de l'objet 7.

Des techniques d'irradiation biénergie ou multi-énergie permettent d'acquérir des informations sur la composition chimique et plus de précision sur la densité des matériaux constituant l'objet.

Pour réaliser des images de l'objet 7 observé de qualité correcte, il est nécessaire que le détecteur 1 ait une réponse spectrométrique aussi bonne que possible, ce qui impose de disposer d'un grand nombre de pixels et donc d'un grand nombre d'électrodes de lecture 3.2. Il faut alors connecter chacune d'entre elles à un circuit de lecture élémentaire. Or, on s'aperçoit que les électrodes de lecture collectent des signaux parasites qu'il faut rejeter si on veut obtenir la qualité recherchée.

Le circuit de lecture 2 doit être capable alors de s'affranchir de ces signaux parasites.

Ces signaux parasites sont dus à trois causes principales à savoir le bruit électronique, le partage d'induction et le partage de charges.

Le bruit électronique est du aux fluctuations aléatoires du signal en absence d'exposition à des rayonnements ionisants.

Le partage d'induction a lieu lorsqu'un rayonnement ionisant est absorbé à proximité d'un pixel et que les charges générées par ce rayonnement ne sont pas collectées par ce pixel. Dans ce cas, elles induisent sur l'électrode associée à ce pixel une impulsion de courant immédiatement suivie d'une autre impulsion de courant de signe opposé.

Le partage de charges a lieu lorsqu'un rayonnement ionisant est absorbé dans un pixel ou entre deux pixels voisins et que les charges sont collectées par les deux électrodes associées à ces deux pixels voisins.

On a représenté de manière schématique sur la figure 1 le circuit de lecture 2. Il est composé, pour chaque électrode de lecture 3.2, d'un préamplificateur de charges 2.10 suivi d'un circuit de mise en forme 2.11. Plusieurs circuits de mise en forme 2.11 peuvent être utilisés, il peut s'agir de filtres à dérivations et intégrations, de filtres gaussiens, de filtres trapézoïdaux, triangulaires. Bien souvent ces filtres sont accordables et on peut régler leur constante de temps. D'une façon générale, ces filtres sont des moyens permettant de former une impulsion analogique dont l'amplitude est proportionnelle à la charge collectée par l'électrode de lecture.

Ces filtres peuvent être suivis de plusieurs circuits comparateurs/compteurs (non représentés), chaque comparateur compare le signal fourni par le filtre à un seuil déterminé et le compteur s'incrémente si le seuil est dépassé. Cela permet une classification grossière du rayonnement ionisant absorbé dans quelques canaux d'énergie. Ce type de circuit ne prévoit pas de traitement des signaux parasites.

Il existe d'autres dispositifs de détection de rayonnement ionisant dont les circuits de lecture comportent en outre un convertisseur analogique dans chaque pixel comme le circuit Timepix développé par la collaboration Medipix ou un convertisseur numérique analogique et un circuit convertisseur temps numérique comme le circuit ERPC de la société AJAT. Ces deux circuits de lecture mesurent l'amplitude des impulsions pour chaque photon ayant interagi dans le détecteur. Ils permettent d'obtenir le spectre en énergie des interactions s'étant produites dans chaque pixel du détecteur. Ils sont aussi capables de sommer l'amplitude des impulsions détectées simultanément dans deux pixels voisins pour corriger les effets de du partage de charges. Ils ne peuvent pas en revanche distinguer des impulsions dues au partage d'induction et les traitent comme des impulsions utiles dès que leur amplitude dépasse un seuil de détection.

La demande de brevet EP (1739456) décrit un procédé d'optimisation des performances d'un détecteur à semi-conducteur destiné à détecter notamment des rayonnements ionisants qui permet de traiter les phénomènes liés au partage des charges.

## EXPOSÉ DE L'INVENTION

La présente invention a justement comme but de proposer un dispositif de détection d'un rayonnement ionisant qui corrige les effets du partage d'induction et éventuellement du partage de charges. Le dispositif obtenu permet d'obtenir une meilleure réponse spectrométrique, c'est-à-dire une estimation plus fiable, que dans l'art antérieur, de l'énergie des interactions, en éliminant le bruit généré par le partage d'induction et éventuellement le partage de charges.

La réduction de ces sources de bruit entraine également une meilleure sensibilité.

Enfin, la correction du partage de charges peut engendrer une meilleure résolution spatiale.

Pour y parvenir, la présente invention propose un dispositif de détection d'un rayonnement ionisant comportant un détecteur en matériau semi-conducteur destiné à être polarisé grâce à des électrodes, parmi lesquelles des électrodes de lecture reliées à un circuit de lecture qui numérise des signaux qu'elles fournissent, ces signaux étant traités pour rejeter ceux qui sont la cause de la réponse spectrométrique médiocre.

Plus précisément, la présente invention est un dispositif de détection d'un rayonnement ionisant tel que décrit dans la revendication 1.

On rappelle que la ligne de base correspond au niveau du signal lorsqu'il n'y a pas d'impulsion.

Les premiers moyens de traitement peuvent comporter des moyens de traitement analogiques incluant un préamplificateur de charges relié éventuellement à un circuit de mise en forme, ces moyens de traitement analogiques étant aptes à fournir une impulsion analogique dont l'amplitude est proportionnelle à la charge collectée par une des électrodes de lecture.

En variante, les premiers moyens de traitement peuvent comporter des moyens de traitement numériques aptes à fournir une impulsion numérisée lorsqu'une charge a été collectée par une des électrodes de lecture, cette impulsion numérisée étant formée d'une succession de signaux discrets, ces moyens de traitement numériques étant en aval des moyens de traitement analogiques dans la mesure où les moyens de traitement analogiques sont présents.

Les moyens de traitement numériques peuvent comporter un numériseur et éventuellement en aval des moyens de mise en forme numériques.

Il est possible que les seconds moyens de traitement soient numériques.

Ils peuvent comporter en outre des moyens de détermination d'un écart temporel entre deux impulsions numérisées fournies par les premiers moyens de traitement et issues de deux électrodes voisines, et des moyens de rejet de l'une des impulsions numérisées et de conservation de l'autre impulsion numérisée en fonction de cet écart temporel. Ainsi, les seconds moyens de traitement corrigent un partage de charges.

L'écart temporel peut être l'écart entre le maximum de l'une des impulsions et le maximum de l'autre des impulsions, cet écart devant être compris dans une fenêtre d'acceptation prédéterminée pour que les moyens de rejet rejettent l'une des impulsions numérisées et conservent l'autre.

Les moyens de rejet peuvent rejeter l'impulsion numérisée dont l'amplitude maximale est la plus petite et conserver l'impulsion numérisée dont l'amplitude maximale est la plus grande.

Les seconds moyens de traitement peuvent comporter, en outre, des moyens de correction de l'impulsion numérisée conservée avec l'impulsion numérisée rejetée.

Les moyens de correction de l'impulsion numérisée conservée peuvent ajouter à l'amplitude maximale de l'impulsion numérisée conservée l'amplitude maximale de l'impulsion numérisée rejetée.

Les seconds moyens de traitement ou les premiers moyens de traitement peuvent, en outre, comporter des moyens de discrimination d'amplitude aptes à rejeter toute impulsion que lesdits moyens de traitement ont à traiter ayant une amplitude maximale inférieure à un seuil prédéterminé. Ainsi le bruit électronique est éliminé.

Le paramètre déterminé par les seconds moyens de traitement peut être un paramètre temporel choisi parmi le temps de montée de l'impulsion, la durée écoulée entre le début de l'impulsion et un premier passage par zéro de l'impulsion.

Par valeur de l'amplitude de l'impulsion après un passage par la ligne de base (par exemple un passage par zéro) entre le début et la fin de l'impulsion, on entend :

lorsque l'impulsion est analogique, une valeur que peut prendre l'impulsion après un passage par la ligne de base entre le début et la fin de l'impulsion analogique ;
lorsque l'impulsion est numérisée une valeur prise par un des signaux discrets la constituant, après un passage par la ligne de base entre le début et la fin de l'impulsion numérisée.

Cette valeur de l'amplitude de l'impulsion après un passage par la ligne de base entre le début et la fin de l'impulsion peut être le minimum Min(i) de l'impulsion.

Lorsque les seconds moyens de traitement sont analogiques, ledit paramètre temporel peut correspondre à la durée pendant laquelle l'impulsion analogique a une amplitude positive.

La présente invention concerne également un procédé de détection d'un rayonnement ionisant par un détecteur en matériau semi-conducteur destiné à être polarisé grâce à des électrodes, parmi lesquelles des électrodes de lecture aptes à collecter charges créées dans le détecteur lors d'une interaction entre le rayonnement ionisant et le matériau semi-conducteur du détecteur et reliées à un circuit de lecture. Le procédé comporte les étapes de :

-    fourniture après traitement par des premiers moyens de traitement d'une impulsion lorsqu'une charge a été collectée par une des électrodes de lecture, l'impulsion se formant par rapport à une ligne de base ;
-    traitement par des seconds moyens de traitement de l'impulsion fournie par les premiers moyens de traitement, ce traitement consistant à :

- déterminer par des moyens de détermination un paramètre comprenant un paramètre temporel de l'impulsion ou une valeur de l'amplitude de l'impulsion après un passage par la ligne de base entre le début et la fin de l'impulsion,
- rejeter par des moyens de rejet l'impulsion en fonction de la valeur dudit paramètre et conserver l'impulsion si elle n'est pas rejetée,

- exploitation de l'impulsion conservée par les moyens de rejet.

On obtient ainsi une correction du partage d'induction.

L'étape de fourniture par les premiers moyens de traitement peut fournir une impulsion analogique ou numérisée.

Le traitement par les seconds moyens de traitement peut consister à déterminer un écart temporel entre deux impulsions numérisées fournies par les premiers moyens de traitement et issues de deux électrodes voisines, à rejeter l'une des impulsions numérisées et à conserver l'autre impulsion numérisée en fonction de cet écart temporel. On obtient ainsi une correction du partage de charges.

En outre, le traitement par les seconds moyens de traitement peut consister à corriger l'impulsion numérisée conservée avec l'impulsion numérisée rejetée.

Le procédé peut comporter, de manière additionnelle, une étape de discrimination en amplitude visant à rejeter toute impulsion devant être traitée par les premiers moyens de traitement ou les seconds moyens de traitement ayant une amplitude maximale inférieure à un seuil prédéterminé. On obtient ainsi une élimination du bruit électronique.

## BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :

la figure 1 illustre le principe de détection de rayonnement ionisant à l'aide d'un dispositif de détection de rayonnement ionisant selon l'art antérieur ;

la figure 2A illustre l'allure du signal en sortie du préamplificateur de charges et la figure 2B l'allure du signal en sortie du circuit de mise en forme, ces signaux étant issus de deux électrodes de lecture voisines ;

la figure 3A montre un premier exemple de dispositif de détection de rayonnement ionisant objet de l'invention et la figure 3B montre un autre exemple de dispositif de détection de rayonnement ionisant objet de l'invention ;

la figure 4A illustre une impulsion numérisée issue d'une électrode de lecture i et une impulsion numérisée issue d'une électrode de lecture voisine i+1 et la figure 4B montre la dérivée numérique des impulsions numérisées précédentes ;

la figure 5 est un diagramme d'un algorithme mis en oeuvre dans les seconds moyens de moyens de traitement illustrés à la figure 3A ;

les figures 6A, 6B, 6C montrent des exemples d'impulsions analogiques numérisées par un oscilloscope numérique et fournies par trois électrodes de lecture voisines correspondant à des situations d'interactions différentes entre un rayonnement ionisant émis par une source de rayonnement ionisant en cobalt 57 et un détecteur à semi-conducteur en tellurure de cadmium ;

la figure 7A est le spectre obtenu avec le même ensemble source-détecteur que sur les figures 6A-6C sans traitement du partage d'induction, la figure 7B est le spectre obtenu avec le même ensemble source-détecteur avec traitement du partage d'induction ;

la figure 8 illustre le spectre obtenu avec le même ensemble source-détecteur que sur les figures 6A-6C avec uniquement le traitement du bruit électronique, le spectre obtenu avec traitement du bruit électronique et du partage de charges, le spectre obtenu avec traitement du bruit électronique, du partage de charges et du partage d'induction.

Des parties identiques, similaires ou équivalentes des différentes figures décrites ci-après portent les mêmes références numériques de façon à faciliter le passage d'une figure à l'autre.

## EXPOSÉ DÉTAILLÉ DE MODES DE RÉALISATION PARTICULIERS

Pour pouvoir améliorer la réponse spectrométrique du dispositif de détection de rayonnement ionisant objet de l'invention, les inventeurs ont déterminé trois types de signaux parasites qui dégradent les performances du dispositif de détection de rayonnement ionisant.

Il y a bien sûr de manière classique le bruit électronique dont l'amplitude et la fréquence varient aléatoirement et que l'on retrouve inévitablement dans tous les circuits électroniques. Un tel bruit électronique est traité par seuillage d'amplitude, selon des dispositifs de seuillage bien connus. Une telle étape de seuillage est facultative.

Il y a également les charges induites. On se réfère de nouveau à la figure 1. Les charges induites apparaissent au niveau d'une électrode de lecture 3.1, 3.2 du fait de la migration de porteurs de charge créés par interaction entre le rayonnement ionisant 5 et le matériau semi-conducteur du détecteur 1. Les impulsions dues au partage d'induction obtenues ne sont pas dues à des charges collectées suite à l'interaction du rayonnement ionisant 5 avec le matériau semi-conducteur du détecteur mais à la migration, au mouvement des porteurs de charge dans le matériau semi-conducteur polarisé suite à l'interaction.

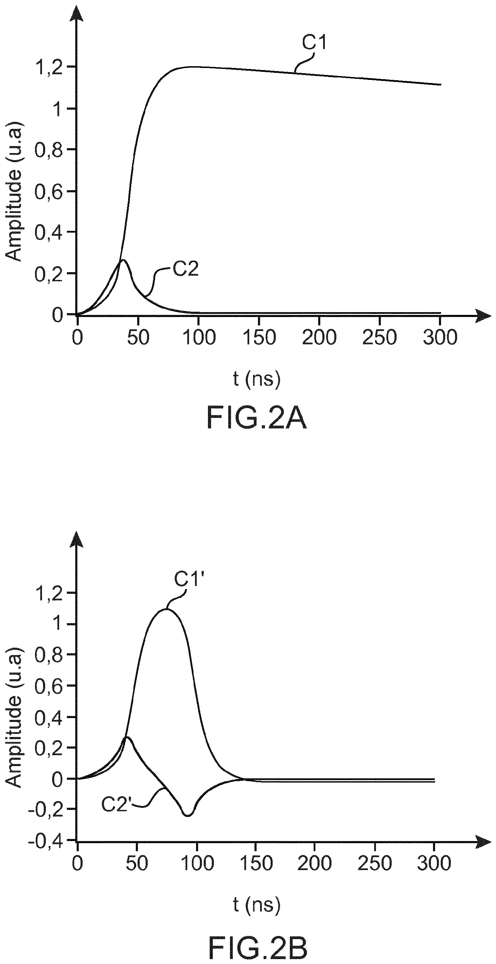

Sur la figure 2A, la courbe C1 représente, en fonction du temps, l'amplitude d'une impulsion fournie par un préamplificateur de charges relié à une première électrode de lecture, du fait de la collecte de charges engendrées par une interaction dans le matériau semi-conducteur. Cette impulsion est, au début, de forte amplitude, elle a un temps de montée assez rapide puis elle décroît lentement.

La courbe C2 représente, toujours en fonction du temps, l'amplitude de l'impulsion fournie par un préamplificateur de charges relié à une électrode de lecture voisine de la première électrode de lecture. L'impulsion est engendrée par des partages d'induction, ces derniers étant générés par la migration de porteurs de charge au voisinage de cette électrode. L'impulsion a une amplitude beaucoup plus faible, elle a un temps de montée et un temps de descente rapides.

Sur la figure 2B, on a représenté l'impulsion fournie par les moyens de filtrage du circuit de lecture qui, dans l'exemple traité, sont un filtre à ligne à retard. La courbe C1' correspond à la courbe C1 après filtrage. Elle prend la forme d'une impulsion unipolaire sensiblement symétrique et dont la durée est sensiblement égale à deux fois le retard apporté par la ligne à retard. Ce retard vaut environ 50 ns dans l'exemple décrit. L'amplitude de l'impulsion unipolaire est proportionnelle à la charge libérée dans le matériau semi-conducteur du détecteur par l'interaction. La courbe C2' correspond à la courbe C2 après filtrage par les moyens de filtrage 2.11. Il s'agit d'une impulsion ayant une composante positive, (encore appelée lobe positif) plus brève que l'impulsion C1', suivie d'une composante négative (encore appelée lobe négatif) ayant sensiblement la même durée que la composante positive et dont l'amplitude, en général, est supérieure ou égale à celle de la composante positive.

Enfin, il y a le partage de charges qui se produit lorsque les charges générées par l'interaction d'un rayonnement ionisant dans le détecteur sont collectées par plusieurs électrodes adjacentes.

Lorsqu'une interaction a lieu près de la frontière entre un volume de matériau semi-conducteur associé à une première électrode de lecture et un volume de matériau semi-conducteur associé à une électrode de lecture voisine de la première électrode, les porteurs de charge se partagent entre la première électrode et sa voisine. Lorsque les électrodes de lecture sont petites et très rapprochées, par exemple au pas de 0,8 mm, des charges collectées sur des électrodes voisines peuvent avoir été générées par une même interaction. De même, lors d'une première interaction, un rayonnement ionisant secondaire peut être émis et produire une interaction secondaire dans un volume de matériau semi-conducteur voisin de celui dans lequel a eu lieu la première interaction.

La somme des signaux fournis par les électrodes de lecture voisines d'une première électrode de lecture correspond en principe à la charge générée lors d'une interaction dans le volume de matériau semi-conducteur associé à cette première électrode de lecture.

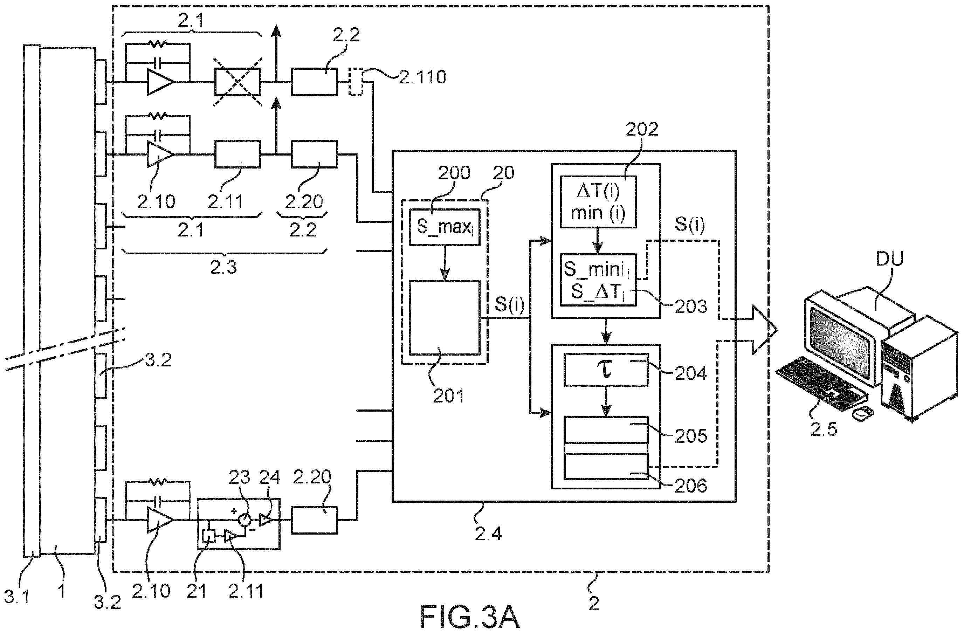

On va maintenant s'intéresser à un dispositif de détection de rayonnement ionisant conforme à l'invention. On se réfère à la figure 3A. Le détecteur à semi-conducteur 1 muni de ses électrodes 3.1, 3.2 sur deux faces principales, de préférence opposées, est sensiblement identique à celui de la figure 1. On suppose que les électrodes de lecture 3.2 sont des anodes.

Le dispositif de détection, objet de l'invention, comporte également un circuit de lecture 2 relié à chacune des électrodes de lecture 3.2. Ce circuit de lecture 2 comporte, connectés à chacune des électrodes de lecture 3.2, des premiers moyens de traitement 2.3 aptes à fournir une impulsion lorsqu'une charge a été collectée par une des électrodes de lecture 3.2. Ces premiers moyens de traitement 2.3 comportent dans l'exemple de la figure 3A des moyens de traitement analogiques 2.1 incluant un préamplificateur de charges 2.10 connecté à chacune des électrodes de lecture 3.2 et un circuit de mise en forme analogique 2.11 connecté en sortie de chaque préamplificateur de charges 2.10. Un préamplificateur de charges 2.10 est un moyen bien connu de l'homme du métier et il n'est pas décrit plus en détail. Le circuit de mise en forme analogique 2.11 peut être un filtre à ligne à retard ou autre. Sur la figure 3A, on a représenté de manière détaillée les moyens de traitement analogiques 2.1. Le circuit de mise en forme 2.11 est, dans cet exemple, un filtre à ligne à retard. Il comporte dans une première branche, une ligne à retard 21 reliée au préamplificateur de charges 2.10 d'un côté, et de l'autre, à un amplificateur de gain un 22. La sortie de l'amplificateur de gain un 22 est reliée à une entrée négative d'un soustracteur 23, ce soustracteur 23 ayant une entrée positive reliée à la sortie du préamplificateur de charges 2.10. On soustrait donc d'un signal fourni par le préamplificateur de charges 2.10, le même signal mais retardé par la ligne à retard 21. La sortie du soustracteur 23 alimente un amplificateur de gain supérieur à un 24. La sortie de l'amplificateur de gain supérieur à un 24 fournit une impulsion analogique dont l'amplitude est proportionnelle à la charge collectée par l'électrode de lecture à laquelle sont reliés les premiers moyens de traitement 2.3. Cette charge collectée est généralement proportionnelle à l'énergie libérée par le rayonnement ionisant ayant interagi avec le volume de matériau semi-conducteur.

De préférence, lorsqu'une charge est collectée par l'électrode de lecture, le circuit de mise en forme 2.11 permet d'obtenir une impulsion unipolaire et généralement symétrique. Cette impulsion peut par exemple avoir la forme d'une gaussienne.

En variante, les moyens de traitement analogiques 2.1 pourraient ne comprendre que le préamplificateur de charges 2.10 et pas le circuit de mise en forme 2.11.

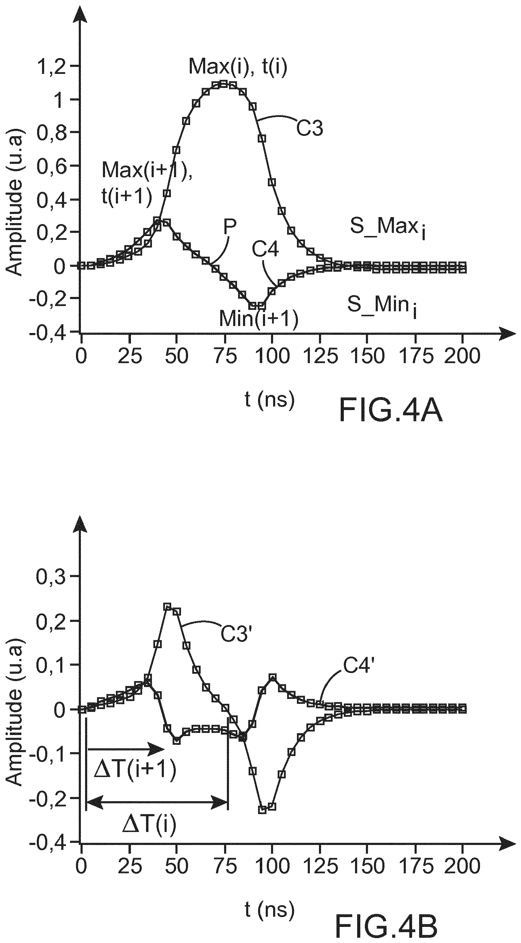

Dans l'exemple de la figure 3A, les premiers moyens de traitement 2.3 comportent en outre, en aval des moyens de traitement analogiques 2.1, des moyens de traitement numériques 2.2 comprenant un numériseur 2.20 de l'impulsion analogique fournie par les moyens de traitement analogiques 2.1. Ce numériseur 2.20 est formé par autant de convertisseurs analogiques-numériques que de circuits de mise en forme 2.11. Chacun des convertisseurs analogiques-numériques est relié en sortie d'un circuit de mise en forme 2.11. Ce numériseur 2.20 convertit l'impulsion analogique fournie par les moyens de traitement analogiques 2.1, dans l'exemple par le circuit de mise en forme 2.11 en une impulsion numérisée. L'impulsion numérisée est formée d'une pluralité de signaux numériques discrets se succédant, ils sont représentés par des points sur les figures 4A, 4B comme on le verra ultérieurement. Sur la figure 4A, on a représenté l'impulsion numérisée issue d'une électrode de lecture i et d'une électrode de lecture voisine i+1, lors d'une interaction du rayonnement ionisant dans un volume de matériau semi-conducteur associé à l'électrode de lecture i. Les dénominations i et i+1 correspondent au rang de l'électrode de lecture sur une ligne d'électrodes de lecture successives.

Dans cet exemple, et de façon non limitative, l'impulsion numérisée issue de l'électrode de lecture i est positive, ce qui signifie que les moyens de traitement analogiques 2.1 fournissent également une impulsion analogique positive. Mais l'invention s'applique naturellement aussi au cas où l'impulsion correspondant à une charge mesurée est négative.

Le circuit de lecture 2 comporte, de plus, des seconds moyens de traitement 2.4 des impulsions fournies par les premiers moyens de traitement 2.3, destinés à rejeter toute impulsion qui traduirait un partage d'induction.

Dans l'exemple de la figure 3A, les seconds moyens de traitement 2.4 sont numériques, ils se trouvent en aval des moyens de traitement numériques 2.2.

Les seconds moyens de traitement 2.4 peuvent être formés d'un microprocesseur, par exemple, un circuit logique programmable tel qu'un FPGA (acronyme de field-programmable gate array, soit réseau de portes programmables). Les sorties de tous les convertisseurs analogiques-numériques 2.20 sont reliées en entrée du microprocesseur 2.4. Les seconds moyens de traitement 2.4 ont leur sortie reliée à des moyens 2.5 d'exploitation des impulsions numérisées qui n'ont pas été rejetées par les seconds moyens de traitement 2.4, ces impulsions numérisées sont qualifiées de « conservées ». De tels moyens d'exploitation 2.5 comportent par exemple un microprocesseur, par exemple celui d'un dispositif utilisateur DU, tel un ordinateur personnel. Ces moyens d'exploitation 2.5 peuvent comporter une chaîne de spectrométrie permettant d'obtenir un spectre en énergie des impulsions numérisées non rejetées (ou conservées). Ils peuvent également être réalisés par un imageur dont chaque pixel représente le nombre d'impulsions numérisées conservées dans une ou plusieurs bandes d'énergie, ces impulsions numérisées étant générées par une anode déterminée.

Les seconds moyens de traitement 2.4 vont effectuer des traitements sur les impulsions issues des premiers moyens de traitement 2.3, de manière à rejeter des impulsions qui ne seraient pas des signaux utiles, mais des signaux parasites créés par le partage d'induction et éventuellement le partage de charges et/ou du bruit électronique.

En rejetant ces impulsions parasites, on améliore la réponse spectrométrique du dispositif de détection de rayonnement ionisant.

Selon une alternative non représentée pour ne pas multiplier inutilement le nombre de figures, si les moyens de traitement analogiques 2.1 ne comportent pas de circuit de mise en forme, les moyens de traitement numériques 2.20 peuvent comprendre en aval du numériseur 2.20, un circuit de mise en forme 2.110 qui serait alors numérique. Il est esquissé en pointillés sur une des voies de la figure 3A et le circuit de mise en forme analogique est représenté barré.

Ainsi le circuit de mise en forme 2.110 traiterait une impulsion numérisée, c'est-à-dire constituée de signaux numériques discrets. Le circuit de mise en forme 2.110 peut comprendre une ligne à retard, un amplificateur ainsi qu'un soustracteur agencés comme décrit précédemment pour les moyens de mise en forme analogiques 2.11. Son fonctionnement est similaire à celui décrit précédemment, à ceci près que les impulsions traitées sont numériques et plus analogiques. Dans cette variante, les moyens de traitement analogiques 2.1 ne comprendraient que le préamplificateur de charges 2.10.

De manière générale, le circuit de lecture 2 comporte, dans l'exemple décrit à la figure 3A, en aval des électrodes 3.2, des premiers moyens de traitement 2.3 destinés à fournir une impulsion lorsqu'une charge a été collectée par une des électrodes de lecture, ces premiers moyens de traitement 2.3 comportant des moyens de traitement analogiques 2.1 destinés à délivrer une impulsion analogique lorsque la charge a été collectée, cette impulsion analogique ayant une amplitude proportionnelle à la charge collectée par l'électrode de lecture et en suivant des moyens de traitement numériques 2.2 de ladite impulsion analogique, incluant un numériseur 2.20 qui délivre une impulsion numérisée ; des seconds moyens de traitement 2.4 de l'impulsion délivrée par les premiers moyens de traitement 2.3 pour la rejeter si elle est suspectée de correspondre à un partage d'induction et éventuellement un partage de charges ou du bruit électronique.

On a représenté sur la figure 4A, en fonction du temps, avec la référence C3, une impulsion numérisée issue d'une première électrode de lecture i. Cette impulsion numérisée est formée d'une succession, dans le temps, de signaux numériques discrets. Cette impulsion numérisée possède l'amplitude la plus grande. Cette amplitude maximale correspond à la valeur maximale des signaux numériques discrets la constituant.

De plus, cette impulsion numérisée est unipolaire, elle ne franchit pas la ligne de base qui correspond ici à la valeur zéro.

On a représenté également, avec la référence C4, une impulsion numérisée provenant d'une seconde électrode de lecture voisine de la première électrode i+1. Comme on l'a évoqué plus haut les électrodes de lecture peuvent être agencées en barrette ou en matrice.

Lorsqu'il s'agit d'une barrette, les électrodes voisines d'une électrode i, seront l'électrode de lecture qui la précède i-1 et l'électrode qui la suit i+1.

Lorsqu'il s'agit d'une matrice, une électrode i se trouve placée entre une électrode i-1 et une électrode i+1 de la même ligne qu'elle. Elle est voisine des électrodes successives h-1, h et h+1 qui sont dans la ligne qui précède la ligne dans laquelle se trouve l'électrode i. Elle est aussi voisine des électrodes successives j-1, j et j+1 qui sont dans la ligne qui suit la ligne dans laquelle se trouve l'électrode i. Les électrodes h-1, i-1, j-1 sont dans une même colonne, les électrodes h, i, j sont dans une même colonne, les électrodes h+1, i+1, j+1 sont dans une même colonne.

Dans l'exemple décrit à la figure 3A, les seconds moyens de traitement 2.4 sont numériques et sont aptes à rejeter une impulsion numérisée qui correspond à du bruit électronique.

Pour rejeter les impulsions numérisées qui correspondent à du bruit électronique, les seconds moyens de traitement numériques 2.4 comportent des moyens de discrimination 20 en amplitude des signaux numériques discrets d'une impulsion numérisée délivrée par les premiers moyens de traitement 2.3. Ces moyens de discrimination 20 comportent des moyens de détermination 200 d'un seuil $S\_max_i$ de discrimination du bruit électronique pour les signaux numériques discrets d'une impulsion numérisée. Ils comportent également des moyens de rejet 201 de toute impulsion numérisée dont aucun signal numérique discret ne dépasserait le seuil de discrimination du bruit électronique $S\_max_i$ et de conservation dans le cas contraire.

Sur la figure 4A, on a représenté le seuil $S\_max_i$ de discrimination du bruit électronique et l'on s'aperçoit que l'impulsion numérisée C3 dépasse le seuil $S\_max_i$ de discrimination du bruit électronique au moins localement. L'impulsion numérisée C3 sera conservée.

En éliminant toute impulsion numérisée dont les signaux numériques discrets ne dépassent pas le seuil $S\_max_i$ de discrimination du bruit électronique, on élimine le bruit électronique dans le signal utile qui sera fourni par les seconds moyens de traitement numériques 2.4 aux moyens d'exploitation 2.5.

Le seuil $S\_max_i$ de discrimination du bruit électronique peut être différent d'une électrode de lecture à une autre afin de prendre en compte des dispersions de gain et de bruit liées au détecteur et à l'électronique qui suit le détecteur.

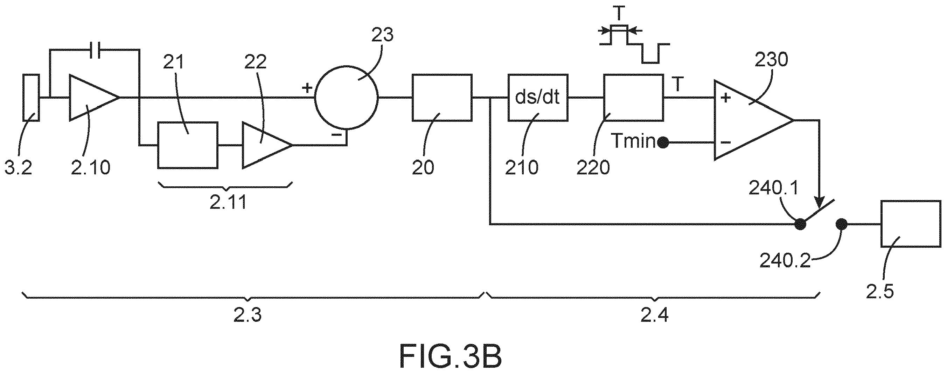

Selon une variante, les moyens de discrimination 20 en amplitude peuvent appartenir aux premiers moyens de traitement 2.3 et être placés en amont des moyens de traitement numériques 2.20 si les premiers moyens de traitement 2.3 comportent moyens de traitement numériques 2.20 ou tout simplement en aval des moyens de traitement analogiques 2.1. On a esquissé sur la figure 3B lesdits moyens de discrimination analogiques 20.

Ces moyens de discrimination sont alors analogiques et s'appliquent aux impulsions analogiques délivrées par le circuit de mise en forme analogique 2.11 ou par le préamplificateur de charges 2.10.

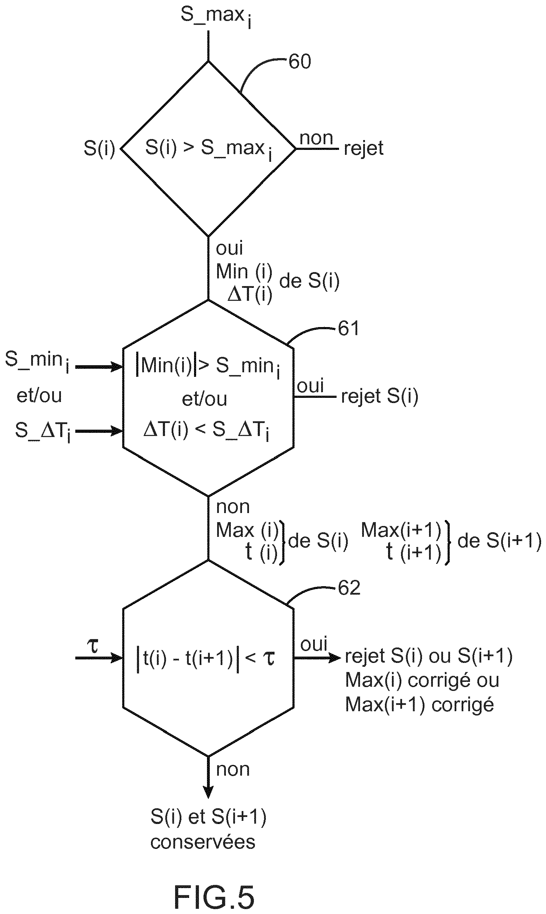

La figure 5 montre sous forme de diagramme un algorithme de traitement des impulsions numérisées S(i) mis en oeuvre par le circuit de lecture et plus particulièrement par les seconds moyens de traitement 2.4 qui dans l'exemple sont numériques. Le premier bloc référencé 60 correspond à une étape d'élimination du bruit électronique.

Toujours en se référant à la figure 3A, pour rejeter les impulsions numérisées qui sont considérées comme correspondant à un partage d'induction, les seconds moyens de traitement 2.4 comportent des moyens de détermination 202 d'un ou plusieurs paramètres caractéristiques de chaque impulsion numérisée S(i) présente en aval des moyens de discrimination en amplitude 20.

Si bien sûr, les moyens de discrimination en amplitude 20 sont inclus dans les premiers moyens de traitement 2.3, les moyens de détermination 202 d'un ou plusieurs paramètres caractéristiques de chaque impulsion numérisée reçoivent directement les impulsions numérisées des premiers moyens de traitement 2.3.

Ces paramètres caractéristiques traduisent un partage d'induction.

Ces paramètres caractéristiques peuvent être temporels ou être une valeur traduisant une amplitude de l'impulsion numérisée après un passage par la ligne de base entre le début et la fin de l'impulsion numérisée conservée.

Le paramètre caractéristique temporel peut être par exemple le temps de montée $\Delta T(i)$ de l'impulsion numérisée S(i) conservée.

En variante, le paramètre temporel peut être la durée écoulée entre le début de l'impulsion numérisée et un premier passage par la ligne de base de l'impulsion numérisée.

La valeur traduisant une amplitude de l'impulsion numérisée après un passage par la ligne de base entre le début et la fin de l'impulsion numérisée conservée peut être le minimum Min(i) de l'impulsion numérisée S(i) conservée, comme on va l'expliquer un peu plus loin.

Le paramètre temporel peut être égal à la variation temporelle entre deux signaux numériques discrets constituant l'impulsion numérisée, l'un d'entre eux étant un signal numérique discret après le passage par la ligne de base entre le début et la fin de l'impulsion numérisée et l'autre signal numérique discret étant par exemple le signal numérique discret illustrant le début de l'impulsion numérique.

L'algorithme de traitement illustré à la figure 5, qui n'est qu'un exemple, prend seulement en compte le minimum et le temps de montée.

Le minimum Min(i) correspond au signal numérique discret minimal de l'impulsion numérisée S(i) issue de l'électrode de lecture i. Plus précisément, ce minimum Min(i) correspond au signal numérique discret d'amplitude maximum après le passage par la ligne de base (c'est-à-dire ici par zéro) des signaux numériques discrets constituants l'impulsion numérisée. En effet, comme on l'a déjà mentionné précédemment, dans une situation de partage d'induction, l'impulsion analogique décrit un premier lobe, positif dans l'exemple étudié, puis un second lobe, négatif dans l'exemple étudié, après un passage par zéro. De ce fait, les signaux numériques discrets constitutifs de l'impulsion numérisée S(i) issue de l'impulsion analogique décrivent également un premier lobe positif, puis un second lobe négatif après un passage par zéro au point P comme l'illustre la figure 4A. Le signal numérique discret minimal est le signal numérique discret de plus forte amplitude dans le lobe négatif. Autrement dit en généralisant, le minimum Min(i) correspond au signal numérique discret d'amplitude maximale après le passage par zéro de l'impulsion numérisée, cette définition s'applique aussi bien lorsque le premier lobe de l'impulsion numérisée est positif que lorsqu'il est négatif.

Lorsque ce signal minimum Min(i) atteint un certain seuil prédéterminé, l'impulsion sera rejetée.

Le temps de montée $\Delta T(i)$ correspond, en principe, à l'intervalle de temps séparant le premier signal numérique discret de l'impulsion numérisée S(i) et le signal numérique discret d'amplitude maximale de l'impulsion numérisée S(i).

Les inventeurs se sont aperçus que la manière de déterminer le temps de montée $\Delta T(i)$ a une importance dans l'efficacité du traitement. Idéalement le temps de montée $\Delta T(i)$ devrait dépendre le moins possible de l'amplitude maximale de l'impulsion numérisée S(i). Une manière efficace d'obtenir un temps de montée $\Delta T(i)$ qui s'affranchit de l'amplitude maximale est de calculer un coefficient de variation, ou dérivée numérique, de l'impulsion numérisée S(i) conservée issue de l'électrode i, un tel coefficient de variation est positif.

Le coefficient de variation K[t] est donné par l'expression suivante :

$$K[t] = S[t-n] - S[t]/(T[t-n]-T[t])$$

Avec T[t] temps associé au signal numérique discret S[t] de l'impulsion numérisée S(i) correspondant à l'électrode de lecture i ;

n entier naturel non nul, en général n=1.

Dans la suite de la description, le terme « dérivée » signifie « dérivée numérique » précédemment définie.

Les seconds moyens de traitement numériques 2.4 sont aptes à dériver l'impulsion numérisée S(i). La figure 4B représente la dérivée de l'impulsion numérisée de la figure 4A, pour l'électrode de lecture i (courbe C3') et pour une électrode voisine, ici l'électrode i+1 (courbe C4').

Les seconds moyens de traitement numériques 2.4 comportent également des moyens de rejet 203 de toute impulsion numérisée conservée qui ne satisferait pas à au moins un critère de partage d'induction, relatif à l'un des paramètres déterminé précédemment. L'impulsion numérisée ayant satisfait au critère de partage d'induction serait conservée. Ces moyens de rejet 203 coopèrent avec les moyens de détermination 202 du ou des paramètres caractéristiques traduisant un partage d'induction.

Un critère de partage d'induction relatif au minimum Min(i) pourrait être :

$$(1) \quad |Min(i)| > S\_min_i$$

avec $S\_min_i$ un seuil en amplitude minimal prédéterminé.

Autrement dit, on considère qu'une impulsion numérisée S(i) est due à un partage d'induction, et donc que l'on ne doit pas en tenir compte, lorsque le signal numérique discret minimal, ou plus généralement, lorsqu'un signal numérique discret, de l'impulsion numérisée S(i) dépasse un certain seuil $S\_min_i$ après le passage par la ligne de base de cette impulsion, la ligne de base étant ici représentée par la valeur zéro.

En réalisant un seuillage de l'impulsion numérisée s(i), le seuil S_min$_i$ étant fixé en dessous de la ligne de base, on peut discriminer des impulsions franchissant ce seuil S_min$_i$. Ces impulsions ayant franchi le seuil S_min$_i$ sont considérées comme des impulsions dues à un partage d'induction et sont donc rejetées. Le seuillage peut être réalisé en identifiant l'amplitude maximale en-dessous de la ligne de base, précédemment définie par le terme Min(i) et en comparant cette amplitude maximale avec le seuil S_min$_i$. Il peut également être réalisé en rejetant une impulsion numérisée dès lors qu'un des signaux franchit ce seuil.

On élimine ainsi des impulsions numérisées qui ont un rebond négatif significatif, ce rebond négatif significatif étant toujours présent dans le cas d'un partage d'induction comme illustré sur la figure 4A pour l'impulsion numérisée C4 issue de l'électrode de lecture i+1. L'impulsion numérisée C3 issue de l'électrode i serait conservée car elle satisfait au critère de partage d'induction relatif au minimum tandis que l'impulsion numérisée issue de l'électrode de lecture i+1 serait rejetée.

En principe, la valeur absolue de l'amplitude du rebond est supérieure à l'amplitude de la partie positive de l'impulsion numérisée. La valeur du seuil S_min$_i$ peut être déterminée de façon empirique ou expérimentale. On peut donc rendre égaux le seuil caractéristique du bruit électronique et le seuil en amplitude minimal prédéterminés :

$$\text{S\_min}_i = |\text{S\_max}_i|.$$

Un critère de partage d'induction relatif au temps de montée $\Delta T(i)$ peut être :

$$(2) \quad \Delta T(i) < \text{S\_}\Delta T_i$$

S_$\Delta T_i$ est un seuil de temps de montée prédéterminé. En effet, comme on peut le voir sur la figure 4B, le temps de montée de l'impulsion numérisée correspondant à un partage d'induction est supérieur au temps de montée d'une impulsion numérisée correspondant à une charge collectée.

Le critère de partage d'induction relatif au temps de montée permet d'éliminer les impulsions numérisées qui ont un temps de montée trop petit pour correspondre à une impulsion numérisée utile. Dans l'exemple décrit, l'impulsion numérisée issue de l'électrode de lecture i serait conservée car elle satisfait au critère de partage d'induction relatif au temps de montée, l'impulsion numérisée issue de l'électrode de lecture i+1 serait rejetée.

Le critère de partage d'induction peut être relatif à la variation temporelle, c'est à dire à la pente, entre deux signaux numériques discrets constituant l'impulsion numérisée, par exemple entre le début de l'impulsion et son maximum. Le critère est tel que la pente est comparée à un certain seuil prédéterminé, et en fonction du résultat de la comparaison, l'impulsion numérisée peut être considérée ou non comme générée par un partage d'induction.

Le critère de partage d'induction relatif à la durée entre deux signaux numériques discrets de l'impulsion numérisée est tel que lorsque cette durée est inférieure à un certain seuil, cela traduit que l'impulsion numérique peut être considérée comme générée par un partage d'induction. Au contraire, lorsque l'impulsion numérisée correspond à une charge collectée, cette durée tend lentement vers zéro.

Les seconds moyens de traitement numériques 2.4 peuvent appliquer un seul des critères ou en combiner plusieurs. Sur la figure 5, le second bloc 61 correspond à une ou plusieurs étapes d'élimination du partage d'induction.

Les seconds moyens de traitement numériques 2.4 peuvent comporter également des moyens de détermination 204 d'impulsions numérisées S(i), S(i+1) issues de deux électrodes de lecture voisines et susceptibles de révéler un partage de charges.

Ces impulsions numérisées sont conservées, cela signifie qu'elles ont été conservées à l'issue de l'étape d'élimination du bruit électronique (bloc 60) et éventuellement à l'issue de l'étape d'élimination du partage d'induction (bloc 61).

On suppose que dans l'exemple décrit, on n'a conservé que deux impulsions numérisées conservées S(i), S(i+1) respectivement issues de l'électrode de lecture i et de l'électrode de lecture i+1. Ces deux impulsions numérisées conservées sont susceptibles de révéler un partage de charges si l'instant de leur maximum est compris dans une même fenêtre d'acceptation temporelle prédéterminée $\tau$. Pour chaque impulsion numérisée conservée S(i), S(i+1), on détermine donc l'instant t(i), t(i+1) de son maximum, c'est-à-dire l'instant du signal numérique discret maximal.

On choisira la fenêtre d'acceptation temporelle $\tau$ la plus faible possible, de manière à limiter les coïncidences fortuites de deux interactions simultanées au niveau de pixels voisins. Elle peut valoir quelques microsecondes voire moins.

Les seconds moyens de traitement numériques 2.4 vérifient si la relation ci-dessous est respectée :

$$(3) \quad |t(i)-t(i+1)| < \tau$$

Si cette relation est vérifiée, on considère que l'on est en présence de deux impulsions numérisées conservées issues de deux électrodes de lecture voisines et susceptibles de révéler un partage de charges.

Les seconds moyens de traitement numériques 2.4 comportent, en outre, des moyens de rejet 205 de l'une des deux impulsions numérisées comme révélant un partage de charges et de conservation de l'autre. Ces moyens de rejet 205 coopèrent avec les moyens de détermination 204 des deux impulsions numérisées conservées issues de deux électrodes de lecture voisines.

Dans l'exemple décrit, l'impulsion numérisée qui est conservée est celle dont l'amplitude maximale est la plus grande. L'autre est rejetée. On notera que l'inverse aurait été possible.

Les seconds moyens de traitement numériques 2.4 appliquent donc la relation (4) pour sélectionner l'impulsion numérisée à conserver et pour rejeter l'autre impulsion numérisée lors du traitement de partage de charges :

$$(4) \quad Max(i) > Max(i+1)$$

Si cette relation (4) est vérifiée, l'impulsion numérisée S(i) conservée est celle issue de l'électrode de lecture i. L'impulsion numérisée S(i+1) rejetée est donc celle issue de l'électrode de lecture i+1.

Les seconds moyens de traitement numériques 2.4 comportent en outre des moyens de correction 206 de l'impulsion numérisée S(i) sélectionnée avec l'impulsion numérisée S(i+1) rejetée. Plus précisément, les moyens de correction 206 de l'impulsion numérisée sélectionnée ajoutent à l'amplitude maximale de l'impulsion numérisée sélectionnée l'amplitude maximale de l'impulsion numérisée rejetée.

On applique donc la relation suivante :

$$Max(i)corrigé = Max(i) + Max(i+1).$$

Si la relation (4) n'est pas vérifiée, cela signifie que l'impulsion numérisée sélectionnée est celle issue de l'électrode de lecture i+1. L'impulsion numérisée rejetée est donc celle issue de l'électrode de lecture i.

Dans ce cas, l'impulsion numérisée sélectionnée est corrigée avec l'impulsion numérisée rejetée de la manière suivante :

$$Max(i+1)corrigé = Max(i+1) + Max(i).$$

Cette impulsion numérisée corrigée est un signal utile qui va être exploité et qui est transmis aux moyens d'exploitation 2.5 par le circuit de lecture 2.

Sur la figure 5, le troisième bloc 62 correspond aux étapes d'élimination des charges partagées.

Dans le déroulement des étapes, après l'éventuelle élimination du bruit électronique, on peut ne corriger que le partage d'induction et pas le partage de charges. En variante, il est possible de corriger le partage d'induction et le partage de charges comme illustré sur la figure 5. En ce qui concerne l'ordre du traitement, il n'est pas imposé. On peut commencer par le traitement concernant les charges induites, puis continuer par le traitement concernant les charges partagées comme illustré sur la figure 5. L'inverse est également possible dans la mesure où les deux corrections sont mise en oeuvre.

Sur la figure 3B, on a représenté une variante d'un dispositif de détection de rayonnement ionisant objet de l'invention dans lequel les premiers moyens de traitement 2.3 sont analogiques et dans lequel les seconds moyens de traitement 2.4 sont également analogiques et sont aptes à corriger le partage d'induction. Les premiers moyens de traitement n'ont pas de moyens de traitement numériques.

Les premiers moyens de traitement 2.3 comportent comme précédemment un préamplificateur de charges 2.10 suivi par un moyen de mise en forme 2.11. Comme on l'a précisé plus haut, on aurait pu avoir seulement le préamplificateur de charges.

On peut prévoir de manière optionnelle, dans les premiers moyens de traitement 2.3 juste en amont des seconds moyens de traitement 2.4, des moyens de discrimination 20 en amplitude comme on a décrit précédemment.

Les seconds moyens de traitement 2.4 connectés en sortie des premiers moyens de traitement 2.3 comportent une cascade avec un filtre dérivateur 210 permettant d'obtenir en sortie un signal qui est une dérivée de l'impulsion analogique délivrée par les premiers moyens de traitement 2.3, un convertisseur temps-amplitude 220 délivrant un signal dépendant de la durée T durant laquelle le signal délivré par le filtre dérivateur 210 est positif. Le signal délivré par le convertisseur temps-amplitude 220 est appliqué en entrée d'un comparateur 230, en l'occurrence dans cet exemple sur l'entrée non-inverseuse du comparateur 230. Ce signal délivré par le convertisseur temps-amplitude 220 va être comparé à une durée de consigne Tmin prédéterminée. Cette durée de consigne est appliquée sur l'autre entrée, en l'occurrence l'entrée inverseuse du comparateur 230.

Les seconds moyens de traitement 2.4 comportent en outre un interrupteur 240 dont une première borne 240.1 est reliée en entrée des seconds moyens de traitement 2.4, c'est-à-dire à la sortie des premiers moyens de traitement 2.3 et dont une seconde borne 240.2 est reliée aux moyens d'exploitation 2.5. Cet interrupteur 240 est commandé par le signal délivré par le comparateur 230. La commande se fait de telle sorte que l'interrupteur 240 se ferme lorsque le signal délivré par le convertisseur temps-amplitude 220 a une durée T supérieure à la durée de consigne Tmin. Ainsi l'impulsion analogique délivrée les premiers moyens de traitement 2.3 est conservée et elle va être transmise aux moyens d'exploitation 2.5.

A l'inverse, lorsque le signal délivré par le convertisseur temps-amplitude 220 a une durée T inférieure à la durée de consigne Tmin, la commande est telle que l'interrupteur 240 est ouvert et que l'impulsion analogique délivrée les premiers moyens de traitement 2.3 est rejetée.

Ainsi, les moyens de détermination d'un paramètre se basent sur un paramètre temporel qui correspond à la durée écoulée entre le début de l'impulsion analogique et un premier passage par zéro de l'impulsion analogique. Cette durée est celle durant laquelle l'impulsion analogique a une amplitude positive.

En variante les seconds moyens de traitement analogiques pourraient permettre de déterminer le temps de montée de l'impulsion analogique ou bien le minimum de l'impulsion analogique après un passage par zéro de l'impulsion analogique. La réalisation de tels seconds moyens de traitement analogiques ne pose pas de problème à l'homme du métier.

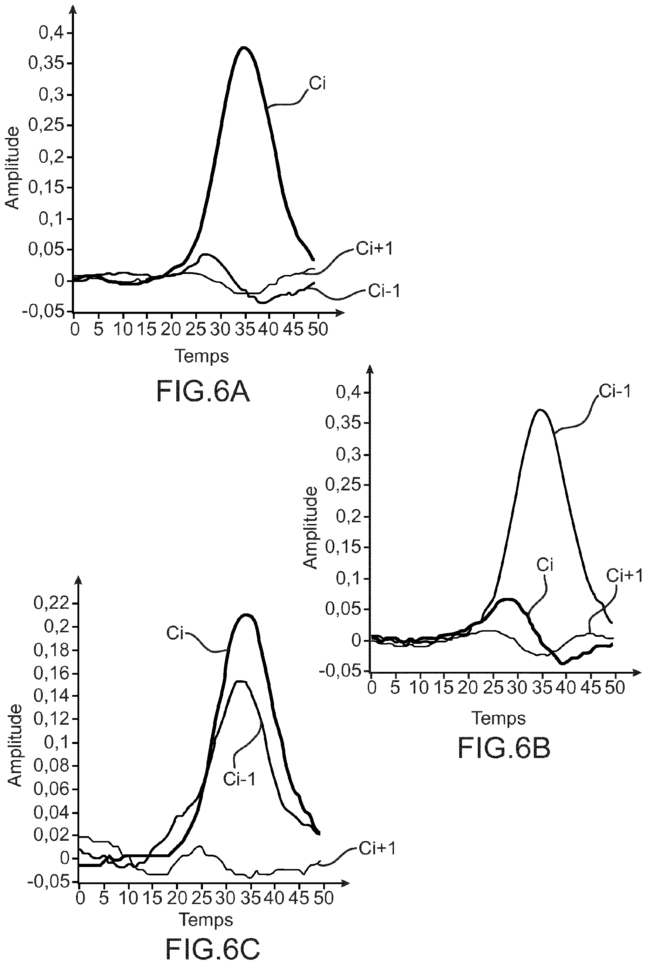

On va maintenant, en se référant aux figures 6A, 6B, 6C, examiner des exemples d'impulsions analogiques numérisées par un oscilloscope numérique et issues de trois électrodes de lecture voisines dénommées i-1, i, i+1.

Le détecteur est un détecteur en tellurure de cadmium CdTe. Le circuit de lecture 2 est conforme à celui illustré à la figure 3A. La source de rayonnement ionisant est une source de rayonnement gamma en cobalt 57. Elle émet des photons gamma dont l'énergie est d'environ 122 keV.

Les impulsions représentées sur la figures 6A, 6B, 6C sont délivrées par un oscilloscope numérique branché en sortie des moyens de traitement analogiques 2.1, en amont des moyens de traitement numériques 2.2, c'est-à-dire en amont des moyens du numériseur 2.20. On a représenté par des flèches, sur la figure 3A, l'endroit où serait branché l'oscilloscope numérique. Contrairement aux modèles analogiques, dans un oscilloscope numérique, le signal à visualiser est préalablement numérisé par un convertisseur analogique-numérique intégré.

Sur ces figures 6A à 6C, les courbes $C_{i-1}$, $C_i$ et $C_{i+1}$ représentent respectivement les impulsions analogiques numérisées par l'oscilloscope numérique et issues respectivement des électrodes i-1, i, i+1.

Sur la figure 6A, la courbe $C_i$ est la conséquence d'un photon gamma ayant interagi avec le matériau semi-conducteur associé à l'électrode de lecture i. Les courbes $C_{i-1}$, $C_{i+1}$ illustrent qu'un faible signal est induit sur les pixels voisins associés aux électrodes i-1 et i+1.

Sur la figure 6B, la courbe $C_{i-1}$ est la conséquence de l'interaction d'un photon gamma avec le matériau semi-conducteur associé à l'électrode de lecture i-1. La courbe $C_i$ a une amplitude significative, elle correspond à un partage d'induction. On remarque toutefois qu'avec le dispositif selon l'invention illustré à la figure 3A, si le seuil minimal $S\_min_i$ est fixé à une valeur trop faible, par exemple est égal à 0,05 V, l'impulsion numérisée issue de l'électrode i sera prise en compte et considérée comme un signal utile. Le choix du seuil minimal $S\_min_i$ est à faire avec soin.

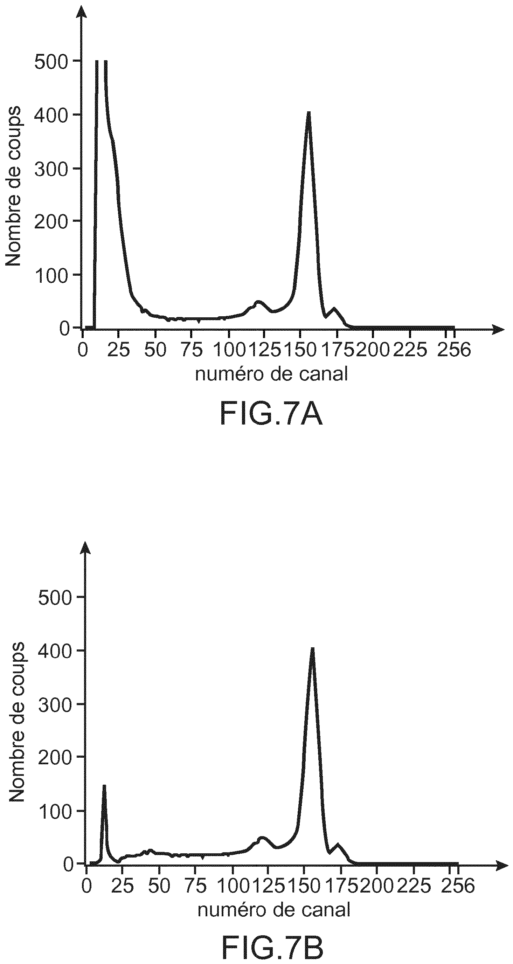

Les figures 7A et 7B montrent le spectre en énergie fourni par le circuit de lecture d'un dispositif de détection de rayonnement ionisant produit par une source de rayonnement gamma en cobalt 57, ce dispositif de rayonnement ionisant étant muni d'un détecteur en tellurure de cadmium. De manière classique, ce spectre illustre le nombre de coups pour chaque canal, un canal correspondant à une division de l'échelle des amplitudes des impulsions, par exemple quelques centaines d'eV. Le nombre de coups est le nombre d'impulsions classées dans chaque canal.

Sur la figure 7A, le spectre représenté a été fourni par un circuit de lecture conforme à l'art antérieur et il n'y a pas eu d'élimination du partage d'induction, le partage d'induction correspondant à la contribution des signaux induits. Les impulsions correspondant au partage d'induction ont une faible amplitude énergétique et sont visibles pour des canaux de faible énergie, dont le numéro est inférieur à environ 50.

Sur la figure 7B, le spectre représenté a été fourni par un circuit de lecture conforme à l'invention avec une fonction de traitement, c'est-à-dire de correction, du partage d'induction.

En clair, les impulsions qui ne respectent pas l'un des critères de partage d'induction exposés plus haut n'ont pas été prises en compte dans le spectre. Le nombre de coups dans les canaux de faible énergie a fortement diminué par rapport à la représentation de la figure 7A.

La figure 7C illustre un cas de partage de charges. La somme de l'amplitude maximale de la courbe $C_i$ et de l'amplitude maximale de la courbe $C_{i-1}$ correspond sensiblement à l'amplitude maximale de la courbe $C_i$ de la figure 7A.

Sans correction du phénomène de partage de charges, on compterait à partir des deux impulsions issues des électrodes de lecture i et i-1, un coup pour chacune des impulsions, mais dans un canal d'énergie inférieure à celle correspondant à l'énergie de l'interaction. On aurait donc fait une erreur sur le nombre de coups mais aussi une erreur sur l'estimation de l'énergie de l'interaction.

En corrigeant l'une des deux impulsions comme le permet le circuit de lecture et en ne prenant en compte que l'impulsion corrigée, on permet de corriger à la fois le double comptage et l'estimation sur l'énergie.

Par contre, si on se contente de la simple correction du partage de charges, sans effectuer de rejet dû au partage d'induction, on risque de sommer l'amplitude d'une impulsion liée au partage d'induction avec l'amplitude d'une impulsion liée au partage de charges. C'est pourquoi, il est plus avantageux que les seconds moyens de traitement s'affranchissent d'abord du partage d'induction avant d'effectuer la correction liée au partage de charges.

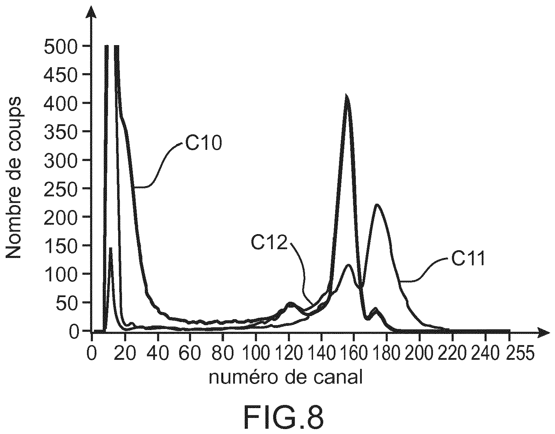

Sur la figure 8, on a représenté des spectres obtenus toujours avec un même détecteur à semi-conducteur en tellurure de cadmium et une même source de rayonnement gamma en cobalt 57. Le spectre référencé C10 provient d'impulsions numérisées n'ayant subi aucun traitement de correction de partage d'induction ou de partage de charges. Le spectre référencé C11 provient d'impulsions numérisées ayant subi le traitement de partage de charges décrit précédemment et le traitement d'élimination du bruit électronique. Le spectre référencé C12 provient d'impulsions numérisées ayant subi, en plus du traitement d'élimination du bruit électronique d'abord le traitement du partage d'induction puis le traitement du partage de charges.

On s'aperçoit que le nombre de coups dans les canaux de faible énergie, numéros de canaux inférieurs à environ 40, a fortement diminué sur le spectre C11 par rapport au spectre C10, puisqu'on a rejeté des impulsions numérisées affectées par le partage de charges. De plus, le pic du spectre C11 a été déformé et élargi, puisqu'on a ajouté au maximum d'une impulsion numérisée sélectionnée, issue d'une électrode de lecture, le maximum d'une impulsion numérisée rejetée issue d'une électrode de lecture voisine, ces deux impulsions numérisées ayant été détectées comme susceptibles de révéler un partage de charges. Cette déformation et cet élargissement peuvent traduire une dégradation de la résolution en énergie.

Le spectre C12 est tel que son pic correspond à des impulsions numérisées issues d'électrodes voisines pour lesquelles on a sommé le maximum, aucune des deux impulsions numérisées qui ont été sommées, n'a subi un traitement de partage d'induction.

En se référent toujours au spectre C12, on peut affirmer que l'on a réduit le nombre de coups à faible amplitude, dans les canaux dont le numéro est inférieur à environ 40, par rapport au spectre C11 ou C10, puisqu'on s'est affranchi du partage d'induction.

On a réduit également le nombre de coups dans les canaux intermédiaires, dont le numéro est compris entre environ 40 et 120, par rapport au spectre C10 puisqu'on s'est affranchi du partage de charges.

On a légèrement augmenté le nombre de coups dans le pic du spectre C12, pour des canaux dont le numéro est compris entre environ 120 et 170 sans trop dégrader la résolution en énergie puisque le traitement du partage de charges a été effectué après le traitement du partage d'induction.

Le traitement effectué sur les impulsions pour s'affranchir du partage d'induction et éventuellement du partage de charges n'est possible que parce que lesdites impulsions ont été numérisées en continu en sortie des premiers moyens de traitement.

Le fait de commencer par le traitement du partage d'induction avant d'effectuer le traitement du partage de charges permet de réduire le seuil de détection en énergie. Par seuil de détection en énergie, on entend l'énergie minimale détectable. En effet, le signal obtenu dans les canaux de faibles énergies n'est pas, ou est moins, saturé avec des signaux correspondants à des signaux induits. Il représente davantage des interactions ayant libéré une faible énergie.

De plus, le fait de ne pas utiliser une impulsion numérisée affectée par le partage d'induction pour corriger une impulsion numérisée conservée lors du traitement du partage de charges permet d'obtenir une correction du partage de charges plus fiable. Autrement dit, la combinaison comprenant une correction des signaux induits suivi d'une correction du partage de charges est particulièrement avantageuse.

En réduisant l'étendue de la fenêtre d'acceptation temporelle, on réduit de manière efficace la probabilité de coïncidences fortuites, c'est-à-dire d'interactions distinctes pouvant être considérées comme un partage de charges.

Grace à la correction du partage de charges, la probabilité de coïncidences fortuites de deux interactions simultanées au niveau de deux pixels voisins est réduite.

**Revendications**

1. Dispositif de détection d'un rayonnement ionisant comportant :

   - un détecteur (1) en matériau semi-conducteur,

- des électrodes (3.1, 3.2) pour polariser le détecteur (1), parmi lesquelles des électrodes de lecture (3.2) aptes à collecter des charges créées dans le détecteur lors d'une interaction entre le rayonnement ionisant et le matériau semi-conducteur du détecteur (1), et
- un circuit de lecture (2) auquel sont reliées les électrodes, le circuit de lecture (2) comportant :

  • des premiers moyens de traitement (2.3) aptes à fournir une impulsion lorsqu'une charge a été collectée par une des électrodes de lecture, l'impulsion étant fournie par rapport à une ligne de base,
  • des seconds moyens de traitement (2.4) de l'impulsion fournie par les premiers moyens de traitement comportant :

    o des moyens de détermination (202) d'au moins un paramètre parmi un paramètre temporel de l'impulsion et une valeur de l'amplitude de l'impulsion après un passage par la ligne de base entre le début et la fin de l'impulsion,
    o des moyens de rejet (203) de l'impulsion en fonction de la valeur dudit paramètre et de conservation de l'impulsion si elle n'est pas rejetée,

  • des moyens d'exploitation (2.5) de l'impulsion conservée par les moyens de rejet.

2. Dispositif de détection selon la revendication 1, dans lequel le paramètre est un paramètre temporel choisi parmi le temps de montée de l'impulsion, la durée écoulée entre le début de l'impulsion et un premier passage par la ligne de base de l'impulsion.

3. Dispositif de détection selon la revendication 1, dans lequel la valeur de l'amplitude de l'impulsion après un passage par la ligne de base entre le début et la fin de l'impulsion est le minimum (Min(i)) de l'impulsion.

4. Dispositif de détection selon l'une des revendications 1 ou 2, dans lequel, lorsque l'impulsion est analogique, le paramètre temporel correspond à la durée pendant laquelle l'impulsion analogique a une amplitude positive.

5. Dispositif de détection selon l'une des revendications 1 à 4, dans lequel les premiers moyens de traitement (2.3) comportent des moyens de traitement analogiques (2.1) incluant un préamplificateur de charges (2.10) éventuellement relié à un circuit de mise en forme (2.11), ces moyens de traitement analogiques (2.1) étant aptes à fournir une impulsion analogique dont l'amplitude est proportionnelle à la charge collectée par une des électrodes de lecture.

6. Dispositif de détection selon l'une des revendications 1 à 3, dans lequel les premiers moyens de traitement (2.3) comportent des moyens de traitement numériques (2.2) aptes à fournir une impulsion numérisée lorsqu'une charge a été collectée par une des électrodes de lecture, cette impulsion numérisée étant formée d'une succession de signaux discrets, ces moyens de traitement numériques (2.2) étant en aval des moyens de traitement analogiques dans la mesure où les moyens de traitement analogiques sont présents.

7. Dispositif de détection selon la revendication 6, dans lequel les moyens de traitement numériques (2.2) comportent un numériseur (2.20) et éventuellement en aval des moyens de mise en forme numériques (2.110).

8. Dispositif de détection selon l'une des revendications 1 à 3, dans lequel les seconds moyens de traitement (2.4) sont numériques.

9. Dispositif de détection selon la revendication 8, dans lequel les seconds moyens de traitement (2.4) comportent, en outre, des moyens de détermination (204) d'un écart temporel entre deux impulsions numérisées fournies par les premiers moyens de traitement (2.3) et issues de deux électrodes voisines, des moyens de rejet (203) de l'une des impulsions numérisées et de conservation de l'autre impulsion numérisée en fonction de cet écart temporel

10. Dispositif de détection selon la revendication 9, dans lequel l'écart temporel est l'écart entre le maximum de l'une des impulsions et le maximum de l'autre des impulsions, cet écart devant être compris dans une fenêtre d'acceptation ($\tau$) prédéterminée pour que les moyens de rejet (203) rejette l'une des impulsions numérisées et conserve l'autre.

11. Dispositif de détection selon la revendication 9, dans lequel les moyens de rejet (203) rejettent l'impulsion numérisée dont l'amplitude maximale est la plus petite et conservent l'impulsion numérisée dont l'amplitude maximale est la plus grande.

**12.** Dispositif de détection selon l'une des revendications 9 à 11, dans lequel les seconds moyens de traitement (2.4) comportent, en outre, des moyens de correction (206) de l'impulsion numérisée conservée avec l'impulsion numérisée rejetée.

**13.** dispositif de détection selon la revendication 12, dans lequel les moyens de correction (206) de l'impulsion numérisée conservée ajoutent à l'amplitude maximale de l'impulsion numérisée conservée l'amplitude maximale de l'impulsion numérisée rejetée.

**14.** Dispositif de détection selon l'une des revendications précédentes, dans lequel les seconds moyens de traitement (2.4) ou les premiers moyens de traitement (2.3) comportent, en outre, des moyens de discrimination d'amplitude (20) aptes à rejeter toute impulsion que lesdits moyens de traitement ont à traiter ayant une amplitude maximale inférieure à un seuil prédéterminé.

**15.** Procédé de détection d'un rayonnement ionisant par un détecteur (1) en matériau semi-conducteur destiné à être polarisé grâce à des électrodes (3.1, 3.2), parmi lesquelles des électrodes de lecture (3.2) aptes à collecter charges créées dans le détecteur lors d'une interaction entre le rayonnement ionisant et le matériau semi-conducteur du détecteur et reliées à un circuit de lecture (2), dans lequel le procédé comporte les étapes de :

- fourniture après traitement par des premiers moyens de traitement (2.3) d'une impulsion lorsqu'une charge a été collectée par une des électrodes de lecture, l'impulsion se formant par rapport à une ligne de base ;

- traitement par des seconds moyens de traitement (2.4) de l'impulsion fournie par les premiers moyens de traitement, le procédé étant **caractérisé par** ce traitement consistant :

• déterminer par des moyens de détermination (202) un paramètre comprenant un paramètre temporel de l'impulsion ou une valeur de l'amplitude de l'impulsion après un passage par la ligne de base entre le début et la fin de l'impulsion,
• rejeter, par des moyens de rejet (203), l'impulsion en fonction de la valeur dudit paramètre et conserver l'impulsion si elle n'est pas rejetée

- exploitation (2.5) de l'impulsion conservée par les moyens de rejet.

**16.** Procédé selon la revendication 15, dans lequel l'étape de fourniture par les premiers moyens de traitement (2.3) fournit une impulsion analogique ou numérisée.

**17.** Procédé selon l'une des revendications 15 ou 16, dans lequel le traitement par les seconds moyens de traitement (2.4) consiste à déterminer un écart temporel entre deux impulsions numérisées fournies par les premiers moyens de traitement (2.3) et issues de deux électrodes voisines, rejeter l'une des impulsions numérisées et conserver de l'autre impulsion numérisée en fonction de cet écart temporel.

**18.** Procédé selon la revendication 17, dans lequel le traitement par les seconds moyens de traitement (2.4) consiste en outre à corriger l'impulsion numérisée conservée avec l'impulsion numérisée rejetée.

**19.** Procédé selon l'une des revendications 15 à 18, comportant en outre une étape de discrimination en amplitude visant à rejeter toute impulsion devant être traitée par les premiers moyens de traitement (2.3) ou les seconds moyens de traitement (2.4) ayant une amplitude maximale inférieure à un seuil prédéterminé.

**Patentansprüche**

**1.** Vorrichtung zum Erfassen einer ionisierenden Strahlung, enthaltend:

- einen Detektor (1) aus Halbleitermaterial,
- Elektroden (3.1, 3.2) zum Polarisieren des Detektors (1), darunter Ausleseelektroden (3.2), die dazu geeignet sind, im Detektor während einer Wechselwirkung zwischen der ionisierenden Strahlung und dem Halbleitermaterial des Detektors (1) erzeugte Ladungen zu sammeln, und
- eine Ausleseschaltung (2), mit der die Elektroden verbunden sind, wobei die Ausleseschaltung (2) enthält:

• erste Verarbeitungsmittel (2.3), die dazu geeignet sind, einen Impuls bereitzustellen, wenn eine Ladung von einer der Ausleseelektroden gesammelt wurde, wobei der Impuls in Bezug auf eine Basisleitung bereitgestellt wird,

• zweite Verarbeitungsmittel (2.4) zum Verarbeiten des Impulses, der von den ersten Verarbeitungsmitteln bereitgestellt wird, enthaltend:

° Mittel (202) zum Bestimmen zumindest eines Parameters aus einem zeitlichen Parameter des Impulses und einem Wert der Amplitude des Impulses nach einem Durchgang durch die Basisleitung zwischen dem Beginn und dem Ende des Impulses,

° Mittel (203) zum Zurückweisen des Impulses in Abhängigkeit von dem Wert des Parameters und zum Aufrechterhalten des Impulses, wenn er nicht zurückgewiesen ist,

• Mittel (2.5) zum Nutzen des von den Zurückweisungsmitteln aufrechterhaltenen Impulses.

2. Erfassungsvorrichtung nach Anspruch 1, wobei der Parameter ein zeitlicher Parameter ist, der ausgewählt ist aus der Impulsanstiegszeit und der zwischen dem Beginn des Impulses und einem ersten Durchgang des Impulses durch die Basisleitung abgelaufenen Zeitdauer.

3. Erfassungsvorrichtung nach Anspruch 1, wobei der Wert der Amplitude des Impulses nach einem Durchgang durch die Basisleitung zwischen dem Beginn und dem Ende des Impulses der Mindestwert (Min(i)) des Impulses ist.

4. Erfassungsvorrichtung nach einem der Ansprüche 1 oder 2, wobei dann, wenn der Impuls analog ist, der zeitliche Parameter einer Zeitdauer entspricht, während der der analoge Impuls eine positive Amplitude hat.

5. Erfassungsvorrichtung nach einem der Ansprüche 1 bis 4, wobei die ersten Verarbeitungsmittel (2.3) analoge Verarbeitungsmittel (2.1) enthalten, die einen Ladungsvorverstärker (2.10) umfassen, der gegebenenfalls mit einer Formungschaltung (2.11) verbunden ist, wobei diese analogen Verarbeitungsmittel (2.1) dazu geeignet sind, einen analogen Impuls bereitzustellen, dessen Amplitude proportional zur von einer der Ausleseelektroden gesammelten Ladung ist.

6. Erfassungsvorrichtung nach einem der Ansprüche 1 bis 3, wobei die ersten Verarbeitungsmittel (2.3) digitale Verarbeitungsmittel (2.2) enthalten, die dazu geeignet sind, einen digitalisierten Impuls bereitzustellen, wenn eine Ladung von einer der Ausleseelektroden gesammelt wurde, wobei dieser digitalisierte Impuls aus einer Folge von diskreten Signalen gebildet ist, wobei diese digitalen Verarbeitungsmittel (2.2) den analogen Verarbeitungsmitteln insofern nachgeschaltet sind, als die analogen Verarbeitungsmittel vorhanden sind.

7. Erfassungsvorrichtung nach Anspruch 6, wobei die digitalen Verarbeitungsmittel (2.2) einen Digitalisierer (2.20), gegebenenfalls den digitalen Formungsmitteln (2.110) nachgeschaltet, enthalten.

8. Erfassungsvorrichtung nach einem der Ansprüche 1 bis 3, wobei die zweiten Verarbeitungsmittel (2.4) digital sind.

9. Erfassungsvorrichtung nach Anspruch 8, wobei die zweiten Verarbeitungsmittel (2.4) ferner Mittel (204) zum Bestimmen eines zeitlichen Abstands zwischen zwei digitalisierten Impulsen enthalten, die von den ersten Verarbeitungsmitteln (2.3) bereitgestellt werden und von zwei benachbarten Elektroden stammen, sowie Zurückweisungsmittel (203) zum Zurückweisen eines der digitalisierten Impulse und zum Aufrechterhalten des anderen digitalisierten Impulses in Abhängigkeit von diesem zeitlichen Abstand.

10. Erfassungsvorrichtung nach Anspruch 9, wobei der zeitliche Abstand der Abstand zwischen dem Maximalwert eines der Impulse und dem Maximalwert des anderen Impulses ist, wobei dieser Abstand in einem vorbestimmten Akzeptanzfenster (τ) enthalten sein muss, damit die Zurückweisungsmittel (203) den einen digitalisierten Impuls zurückweisen und den anderen aufrechterhalten.

11. Erfassungsvorrichtung nach Anspruch 9, wobei die Zurückweisungsmittel (203) denjenigen digitalisierten Impuls zurückweisen, dessen maximale Amplitude die kleinere ist, und denjenigen digitalisierten Impuls aufrechterhalten, dessen maximale Amplitude die größere ist.

12. Erfassungsvorrichtung nach einem der Ansprüche 9 bis 11, wobei die zweiten Verarbeitungsmittel (2.4) ferner Korrekturmittel (206) zum Korrigieren des aufrechterhaltenen digitalisierten Impulses mit dem zurückgewiesenen digitalisierten Impuls enthalten.

13. Erfassungsvorrichtung nach Anspruch 12, wobei die Korrekturmittel (206) zum Korrigieren des aufrechterhaltenen digitalisierten Impulses der maximalen Amplitude des aufrechterhaltenen digitalisierten Impulses die maximale Amplitude des zurückgewiesenen digitalisierten Impulses hinzufügen.

14. Erfassungsvorrichtung nach einem der vorangehenden Ansprüche, wobei die zweiten Verarbeitungsmittel (2.4) oder die ersten Verarbeitungsmittel (2.3) ferner Amplitudendiskriminierungsmittel (20) enthalten, die dazu geeignet sind, jeglichen Impuls zurückzuweisen, den die Verarbeitungsmittel zu verarbeiten haben und der eine maximale Amplitude hat, die geringer als ein vorbestimmter Schwellwert ist.

15. Verfahren zum Erfassen einer ionisierenden Strahlung über einen Detektor (1) aus Halbleitermaterial, der dazu bestimmt ist, mittels Elektroden (3.1, 3.2) polarisiert zu werden, darunter Ausleseelektroden (3.2), die dazu geeignet sind, im Detektor während einer Wechselwirkung zwischen der ionisierenden Strahlung und dem Halbleitermaterial des Detektors erzeugte Ladungen zu sammeln, und die mit einer Ausleseschaltung (2) verbunden sind, wobei das Verfahren die nachstehenden Schritte umfasst:

- nach Verarbeiten durch erste Verarbeitungsmittel (2.3) Bereitstellen eines Impulses, wenn eine Ladung von einer der Ausleseelektroden gesammelt wurde, wobei der Impuls sich in Bezug auf eine Basisleitung formt;
- Verarbeiten des Impulses, der von den ersten Verarbeitungsmitteln bereitgestellt wird, durch zweite Verarbeitungsmittel (2.4),
wobei das Verfahren **dadurch gekennzeichnet ist, dass** diese Verarbeitung darin besteht:

• durch Bestimmungsmittel (202) einen Parameter zu bestimmen, der einen zeitlichen Parameter des Impulses oder einen Wert der Amplitude des Impulses nach einem Durchgang durch die Basisleitung zwischen dem Beginn und dem Ende des Impulses enthält,
• durch Zurückweisungsmittel (203) den Impuls in Abhängigkeit von dem Wert des Parameters zurückzuweisen und den Impuls aufrechtzuerhalten, wenn er nicht zurückgewiesen ist,
• Nutzen (2.5) des von den Zurückweisungsmitteln aufrechterhaltenen Impulses.

16. Verfahren nach Anspruch 15, wobei bei dem Schritt des Bereitstellens durch die ersten Verarbeitungsmittel (2.3) ein analoger oder digitalisierter Impuls bereitgestellt wird.

17. Verfahren nach einem der Ansprüche 15 oder 16, wobei das Verarbeiten durch die zweiten Verarbeitungsmittel (2.4) darin besteht, einen zeitlichen Abstand zwischen zwei digitalisierten Impulsen zu bestimmen, die von den ersten Verarbeitungsmitteln (2.3) bereitgestellt werden und von zwei benachbarten Elektroden stammen, einen der digitalisierten Impulse zurückzuweisen und den anderen digitalisierten Impuls in Abhängigkeit von diesem zeitlichen Abstand aufrechtzuerhalten.

18. Verfahren nach Anspruch 17, wobei das Verarbeiten durch die zweiten Verarbeitungsmittel (2.4) ferner darin besteht, den aufrechterhaltenen digitalisierten Impuls mit dem zurückgewiesenen digitalisierten Impuls zu korrigieren.

19. Verfahren nach einem der Ansprüche 15 bis 18, ferner umfassend einen Schritt der Amplitudendiskriminierung, der darauf abzielt, jeglichen Impuls zurückzuweisen, den von den ersten Verarbeitungsmitteln (2.3) oder von den zweiten Verarbeitungsmitteln (2.4) verarbeitet werden soll und der eine maximale Amplitude hat, die geringer als ein vorbestimmter Schwellwert ist.

## Claims

1. An ionizing radiation detection device comprising :

- a detector (1) of semi-conductor material,
- electrodes (3.1, 3.2) for biasing the detector (1), among which reading electrodes (3.2) capable of collecting charges created in the detector during an interaction between the ionizing radiation and the semi-conductor material of the detector (1), and
- a reading circuit (2) at which are connected the electrodes, the reading circuit (2) including:

- first processing means (2.3) capable of providing a pulse when a charge has been collected by one of the reading electrodes, the pulse being formed with respect to a baseline,
- second means (2.4) for processing the pulse provided by the first processing means including:

  ∘ determining means (202) of at least one parameter from a time parameter of the pulse and an amplitude value of the pulse after a baseline crossing between the start and the end of the pulse,
  ∘ rejecting means (203) of the pulse depending on the value of said parameter and for preserving the pulse if it is not rejected,

  - operating means (2.5) of the pulse preserved by the rejecting means.

2. The detection device according to claim 1, wherein the parameter is a time parameter selected from the rise time of the pulse, the time elapsed between the start of the pulse and the first baseline crossing of the pulse.

3. The detection device according to claim 1, wherein the amplitude value of the pulse after a baseline crossing between the start and the end of the pulse is the minimum (Min(i)) of the pulse.

4. The detection device according to claim 1, wherein, when the pulse is analogue, the time parameter corresponds to the duration during which the analogue pulse has a positive amplitude.

5. The detection device according to claim 1, wherein the first processing means (2.3) include analogue processing means (2.1) including a charge preamplifier (2.10) possibly connected to a shaping circuit (2.11), these analogue processing means (2.1) being capable of providing an analogue pulse the amplitude of which is proportional to the charge collected by one of the reading electrodes.

6. The detection device according to claim 1, wherein the first processing means (2.3) include digital processing means (2.2) capable of providing a digitized pulse when a charge has been collected by one of the reading electrodes, this digitized pulse being formed by a succession of discrete signals, these digital processing means (2.2) being downstream of the analogue processing means insofar as the analogue processing means are present.

7. The detection device according to claim 6, wherein the digital processing means (2.2) include a digitizer (2.20) and possibly downstream of it, digital shaping means (2.110).

8. The detection device according to claim 1, wherein the second processing means (2.4) are digital.

9. The detection device according to claim 8, wherein the second processing means (2.4) further include means (204) for determining a time deviation between two digitized pulses provided by the first processing means (2.3) and coming from two neighbouring electrodes,
means (203) for rejecting one of the digitized pulses and for preserving the other digitized pulse depending on this time deviation.

10. The detection device according to claim 9, wherein the time deviation is the deviation between the maximum of one of the pulses and the maximum of the other of the pulses, this deviation having to be included in an acceptance window ($\tau$) predetermined for the rejecting means (203) to reject one of the digitized pulses and to preserve the other.

11. The detection device according to claim 9, wherein the rejecting means (203) reject the digitized pulse the maximum amplitude of which is the smallest and preserve the digitized pulse the maximum amplitude of which is the greatest.

12. The detection device according to claim 9, wherein the second processing means (2.4) further include means (206) for correcting the preserved digitized pulse together with the rejected digitized pulse.

13. The detection device according to claim 12, wherein the means (206) for correcting the preserved digitized pulse add to the maximum amplitude of the preserved digitized pulse the maximum amplitude of the rejected digitized pulse.

14. The detection device according to claim 1, wherein the second processing means (2.4) or the first processing means (2.3) further include amplitude discriminating means (20) capable of rejecting any pulse that said processing means have to process having a maximum amplitude lower than a predetermined threshold.

**15.** An ionizing radiation detection method by a detector (1) of semi-conductor material for being biased thanks to electrodes (3.1, 3.2), among which reading electrodes (3.2) capable of collecting charges created in the detector during an interaction between the ionizing radiation and the semi-conductor material of the detector and which are connected to a reading circuit (2), wherein the method includes the steps of:

- providing, after processing by first processing means (2.3), a pulse when a charge has been collected by one of the reading electrodes, the pulse being formed with respect to a baseline;
- processing by second processing means (2.4) of the pulse provided by the first processing means, this processing consisting in:

• determining by determining means (202) a parameter comprising a time parameter of the pulse or an amplitude value of the pulse after baseline crossing between the start and the end of the pulse,
• rejecting, by rejecting means (203), the pulse depending on the value of said parameter and preserving the pulse if it is not rejected

- operating (2.5) the preserved pulse by the rejecting means.

**16.** The method according to claim 15, wherein the providing step by the first processing means (2.3) provides an analogue or digitized pulse.

**17.** The method according to claim 15, wherein the processing by the second processing means (2.4) consists in determining a time deviation between two digitized pulses provided by the first processing means (2.3) and coming from two neighbouring electrodes, rejecting one of the digitized pulses and preserving the other digitized pulse depending on this time deviation.

**18.** The method according to claim 17, wherein the processing by the second processing means (2.4) further consists in correcting the preserved digitized pulse together with the rejected digitized pulse.

**19.** The method according to claim 15, further including an amplitude discriminating step for rejecting any pulse to be processed by the first processing means (2.3) or the second processing means (2.4) having a maximum amplitude lower than a predetermined threshold.

FIG.1

FIG.2A

FIG.2B

FIG.3A

EP 2 541 280 B1

FIG.3B

FIG.4A

FIG.4B

FIG.5

FIG.6A

FIG.6B

FIG.6C

FIG.7A

FIG.7B

FIG.8

**EP 2 541 280 B1**